# EUROPÄISCHE PATENTSCHRIFT

(11) **EP 2 302 416 B1**
(45) Veröffentlichungstag und Bekanntmachung des Hinweises auf die Patenterteilung: **19.06.2013**
(21) Anmeldenummer: 09171525.0
(22) Anmeldetag: 28.09.2009
(51) Int. Cl.: G01S 17/93

(54) **Sicherheitsscanner**
Safety scanner
Scanner de sécurité

(43) Veröffentlichungstag der Anmeldung: 30.03.2011
(73) Patentinhaber: SICK AG, 79183 Waldkirch (DE)
(72) Erfinder: Haberer, Manfred, 79359, Riegel (DE)
(74) Vertreter: Ludewigt, Christoph

(56) Entgegenhaltungen:
- JP-A- 2008 275 606
- JP-A- 2008 275 606
- US-A- 4 846 297

## Beschreibung

Die Erfindung betrifft einen Sicherheitsscanner gemäß dem Oberbegriff des Anspruchs 1 sowie ein Verfahren zur Absicherung der Umgebung eines Fahrzeugs.

Zur Überwachung von Arbeitsbereichen werden häufig Sicherheitslaserscanner eingesetzt, wie sie beispielsweise aus US 4846297, JP2008275606 und DE 43 40 756 A1 bekannt sind. Ein von einem Laser erzeugter Lichtstrahl wird über eine Lichtablenkeinheit in einen Schutzbereich gelenkt und dort von einem gegebenenfalls vorhandenen Objekt remittiert. Das remittierte Licht gelangt wieder zurück zu der Laserscaneinheit und wird dort von einem Empfänger detektiert. Die Lichtablenkeinheit ist in der Regel schwenkbar bzw. drehbar ausgestaltet, so dass der von dem Laser erzeugte Lichtstrahl ein durch die Schwenk- bzw. Drehbewegung erzeugtes Schutzfeld periodisch überstreicht. Wird ein vom Objekt remittiertes Lichtsignal aus dem Schutzbereich empfangen, so kann aus der Winkelstellung der Ablenkeinheit auf die Winkellage des Objektes im Schutzbereich geschlossen werden. Wird zusätzlich zum Beispiel die Laufzeit von einzelnen Laserlichtpulsen vom Aussenden bis zum Empfang einer Reflexion an dem Objekt überwacht, kann aus der Laufzeit unter Verwendung der Lichtgeschwindigkeit zusätzlich auf die Entfernung des Objektes vom Laserscanner geschlossen werden. Mit den Winkel- und Entfernungsangaben lässt sich der Ort eines Objektes ermitteln und zum Beispiel zweidimensionale Schutzfelder vollständig überwachen. Befindet sich im Schutzfeld ein unzulässiges Objekt, so kann von der Auswerteeinheit des Scanners ein entsprechendes Warn- oder Stopsignal ausgegeben werden.

Derartige Systeme werden zum Beispiel an Maschinen eingesetzt, bei denen ein Gefahrenbereich überwacht werden muss, der beim Betrieb der Maschine von einer Bedienperson nicht betreten werden darf. Wird mit Hilfe des Laserscanners die Anwesenheit eines unzulässigen Objektes - also zum Beispiel ein Bein einer Bedienperson - im Gefahrenbereich festgestellt, wird ein Nothalt der Maschine bewirkt. Derartige Scansysteme als Sicherheitssensoren müssen zuverlässig arbeiten und deshalb hohe Sicherheitsanforderungen, beispielsweise die Norm EN13849 für Maschinensicherheit und die Gerätenorm EN61496 für berührungslos wirkende Schutzeinrichtungen (BWS), erfüllen.

Zur Erfüllung dieser Sicherheitsnormen sind eine Reihe von Maßnahmen zu treffen, wie z.B. sichere elektronische Auswertung durch redundante, diversitäre Elektronik, Funktionsüberwachung durch beispielsweise Überwachung der Verschmutzung optischer Bauteile, insbesondere einer Frontscheibe und/oder Vorsehen von einzelnen Testzielen mit definierten Reflexionsgraden, die unter den entsprechenden Scanwinkeln erkannt werden müssen.

Solche Sicherheitslaserscanner werden auch an sogenannten FTS ("fahrerlose Transportsysteme") eingesetzt, um zu verhindern, dass diese Transportsysteme mit Objekten, die ihren Fahrweg kreuzen, wie z.B. Personen, zusammenstoßen. Da die Zusammenstoßgefahr geschwindigkeitsabhängig ist, weist der Laserscanner anpassbare Schutzfelddimensionen auf, die in Abhängigkeit der Fahrzeuggeschwindigkeit umschaltbar oder in sonstiger Weise veränderbar sind. Dazu muss die Fahrzeuggeschwindigkeit "sicher" im Sinne der Normen ermittelt werden, wozu Geschwindigkeitssignale notwendig sind, die sicherheitstechnische Anforderungen hinsichtlich Einfehlersicherheit erfüllen müssen.

Bisher gab es dazu folgende Ansätze. In einer ersten bekannten Lösung wurde die Fahrzeuggeschwindigkeit von zwei unabhängigen Inkrementalgebern erfasst, die beide ihre Geschwindigkeitssignale an den Scanner geben. Durch die Redundanz von an sich "nicht-sicheren" Signalen wurde die notwendige Fehlersicherheit erhalten. In einer zweiten Lösung werden "nicht-sichere" Geschwindigkeitssignale eines Inkrementalgebers mit einer Geschwindigkeitsbestimmung über die optische Entfernungsmessung des Laserscanners kombiniert, um auf diese Weise die Geschwindigkeit diversitär zu ermitteln und somit die erforderliche Sicherheit zur Geschwindigkeitsbestimmung zu erreichen.

Die erste Lösung hat die Nachteile, dass im Fahrzeug ein redundanter Inkrementalgeber vorgesehen sein muss, der einzig zu diesem Zweck dient. Dies ist besonders bei kleinen Fahrzeugen konstruktiv schwierig zu realisieren. Des Weiteren muss der Laserscanner Anschlussmöglichkeiten für zwei Inkrementalgeber aufweisen. Da jeder Inkrementalgeber zwei Eingangsklemmen zur Übermittlung der Geschwindigkeitssignale benötigt, bedarf es auch am Laserscanner Bauraum. Insgesamt ist eine solche Lösung mit zusätzlichen Kosten verbunden.

Die zweite Lösung hat den großen Nachteil, dass für die optische Geschwindigkeitsbestimmung immer ein örtlich feststehendes Objekt im Sichtbereich des Laserscanners vorhanden sein muss. Der Laserscanner muss z.B. immer eine feststehende Wand oder dergleichen sehen, um seine Geschwindigkeit dagegen bestimmen zu können. Dazu muss der Laserscanner "wissen", welches der Objekte im Sichtbereich ein feststehendes Objekt ist. Die Auswertung der empfangenen optischen Signale ist deshalb nicht nur rechenintensiv, sondern die Einsatzgebiete sind für einen derartigen Scanner auch begrenzt und abhängig von den Umgebungsbedingungen.

Ausgehend von diesem Stand der Technik ist es Aufgabe der Erfindung, einen Sicherheitsscanner bereitzustellen, mit dem die genannten Nachteile vermieden werden können.

Diese Aufgabe wird gelöst durch einen Sicherheitsscanner mit den Merkmalen des Anspruchs 1 und ein Verfahren mit den Merkmalen des Anspruchs 6.

Der erfindungsgemäße Sicherheitsscanner umfasst
- einen Lichtsender,
- eine Lichtablenkeinheit zur Ablenkung des Lichtes in ein zu überwachendes Schutzfeld,
- einen Empfänger zur Bereitstellung von Empfangssignalen in Abhängigkeit von an im Sichtbereich des Scanners vorhandenen Objekten remittiertem Licht,
- eine Auswerteeinheit zur Auswertung der Empfangssignale und der Inkrementalgebersignale und zur Bereitstellung eines Sicherheitssignals,
- einen ersten, mit einer Fahrzeuggeschwindigkeitsbestimmungseinheit verbundenen Eingang zum Empfang von ersten Signalen, die für eine Fahrzeuggeschwindigkeit repräsentativ sind,
- Umschaltmittel zum sicheren Umschalten zwischen wenigstens zwei unterschiedlichen Schutzfeldern in Abhängigkeit der Fahrzeuggeschwindigkeit,
   wobei
   ein zweiter Eingang mit der Fahrzeuggeschwindigkeitsbestimmungseinheit verbunden ist zum Empfang von Sollgeschwindigkeitssignalen des Fahrzeugs und die Fahrzeuggeschwindigkeitsbestimmungseinheit Vergleichsmittel aufweist, mit denen auf Basis der ersten Signale und der Sollgeschwindigkeitssignale eine Ist- mit einer Sollgeschwindigkeit vergleichbar ist und das Sicherheitssignal auch in Abhängigkeit dieses Vergleichs ausgebbar ist.

In neuartiger Weise arbeitet der erfindungsgemäße Sicherheitsscanner mit der Fahrzeugsteuerung zusammen und erhält von dieser Sollgeschwindigkeitssignale übermittelt. Auf diese Weise kann in der Fahrzeuggeschwindigkeitsbestimmungseinheit der sicheren Auswerteeinheit eine im Sinne der Normen sichere fahrzeuggeschwindigkeitsabhängige Umschaltung der Schutzfelder erfolgen, wobei die sowieso vorhandene Sollgeschwindigkeitsangaben der einer Fahrzeugsteuerung genutzt werden und deshalb redundante externe Geschwindigkeitsmesser entfallen können. So könnte z.B. ein Inkrementalgeber eingespart werden während ein verbleibender Inkrementalgeber die ersten Signale liefert. Die ersten Signale, die für eine Geschwindigkeit des Fahrzeugs repräsentativ sind, könnten auch anderweitig, z.B. mittels eines Navigationssystems, das jeweils die genaue Lage des Fahrzeugs zu jedem Zeitpunkt kennt, geliefert werden.

Die Einsparung eines Inkrementalgebers spart weiteren Bauraum auch im Fahrzeug.

Der erfindungsgemäße Sicherheitsscanner ist für jede FTS-Anwendung geeignet und nicht auf Wände oder dergleichen im Sichtbereich angewiesen. Eine solche optische Geschwindigkeitsbestimmung erfolgt nicht.

Die Sollgeschwindigkeit kann einkanalig z.B. mittels eines binären Musters an den Sicherheitsscanner übertragen werden, so dass weniger Eingangsklemmen notwendig sind und Bauraum gespart werden kann. Alternativ wäre auch denkbar, dass erster und/oder zweiter Eingang zum Anschluss an ein Bussystem ausgebildet sind, so dass die entsprechenden Signale für die Geschwindigkeitsbestimmung über ein Bussystem übertragen werden können.

Wenn im Folgenden von "Umschatten" von Schutzfeldern die Rede ist, ist damit jede Art von Änderung eines Schutzfelds gemeint, z.B. Änderungen der Abmessungen, Änderungen der Ausrichtung, stufenartige Umschaltung, kontinuierliche Änderungen und dergleichen.

Entsprechend dem erfindungsgemäßen Sicherheitsscanner weist das Verfahren zur Absicherung der Umgebung eines Fahrzeugs, insbesondere fahrerlosen Transportfahrzeugs, folgende Schritte auf:
- Aussenden und Ablenken eines Lichtstrahls in ein zu überwachendes Schutzfeld,
- Empfangen von an im Sichtbereich des Scanners vorhandenen Objekten remittiertem Licht und Bereitstellen von Empfangssignalen,
- Auswerten der Empfangssignale und in Abhängigkeit davon Bereitstellen eines Sicherheitssignals,
- Empfangen von ersten Signalen, die für eine Ist-Geschwindigkeit des Fahrzeugs repräsentativ sind,
- Empfangen von Sollgeschwindigkeitssignalen des Fahrzeugs,
- Bestimmen einer Fahrzeitgeschwindigkeit durch Vergleichen der Ist- mit der Soll-geschwindigkeit auf Basis der ersten Signale und der Sollgeschwindigkeitssignale,
- Ausgeben des Sicherheitssignals auch in Abhängigkeit dieses Vergleichs,
- Umschalten zwischen wenigstens zwei unterschiedlichen Schutzfeldern in Abhängigkeit der Fahrzeuggeschwindigkeit.

Um lediglich außerhalb bestimmter zulässiger Toleranzen umzuschalten und ein ständiges Umschalten in Grenzbereichen zu vermeiden, ist vorgesehen, dass bei Abweichung der Ist-Geschwindigkeit von der Soll-Geschwindigkeit um mehr als einen Grenzwert das Sicherheitssignal ausgegeben wird und eine Abweichung der Soll- von der Ist-Geschwindigkeit über den Grenzwert für eine begrenzte zeitliche Dauer toleriert wird.

Zur Erhöhung der Sicherheit wird bei Abweichung der Soll- von der Ist-Geschwindigkeit immer die höhere Geschwindigkeit zur Schutzfelddimensionierung bzw. Auswahl eines Schutzfeldes verwendet. Dann ist sichergestellt, dass ausreichende Zeit für einen Nothalt vorhanden ist.

Im Folgenden wird die Erfindung anhand eines Ausführungsbeispiels unter Bezugnahme auf die Zeichnung im Detail erläutert. In der Zeichnung zeigen:
- Fig. 1: eine schematische Darstellung eines Sicherheitsscanners gemäß der Erfin- dung;
- Fig. 2: ein FTS mit einem erfindungsgemäßen Sicherheitsscanner.

Der im Folgenden beschriebene Sicherheitsscanner dient zur Absicherung der Umgebung eines Fahrzeugs, insbesondere fahrerlosen Transportsystems (FTS).
Der Scanner überwacht ein vor dem FTS gelegenes Schutzfeld, in das während der Fahrt zur Vermeidung von Zusammenstößen keine Person eindringen darf. Befindet sich ein unzulässiges Objekt, zum Beispiel das Bein einer Bedienperson, in dem Gefahrenbereich, so wird dies von dem Scanner detektiert und ein Warnsignal ausgegeben und/oder die Gefahr bringende Bewegung gestoppt, z.B. eine Notbremsung und/oder Ausweichmanöver über die Fahrzeugsteuerung eingeleitet.

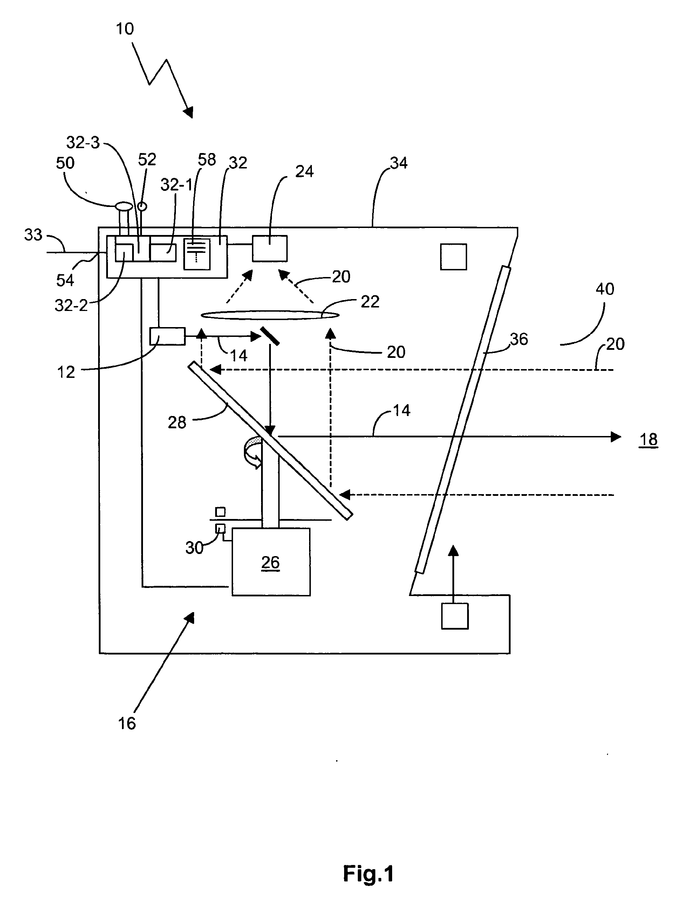

Fig. 1 zeigt schematisch den Aufbau eines solchen Sicherheitsscanners 10. Ein von einem Lichtsender, z.B. Laser 12, erzeugter Lichtstrahl 14, der aus einzelnen Lichtimpulsen besteht, wird über eine Lichtablenkeinheit 16 in einen Erfassungsbereich 18 gelenkt und dort von einem gegebenenfalls vorhandenen Objekt remittiert.
Das remittierte Licht 20 gelangt wieder zurück zum Laserscanner 10 und wird dort über die Ablenkeinheit 16 und mittels einer Empfangsoptik 22 von einem Empfänger 24 detektiert. Die Lichtablenkeinheit 16 ist in der Regel drehbar ausgestaltet, wobei ein Motor 26 einen Drehspiegel 28 kontinuierlich rotiert. Die jeweilige Winkelstellung des Drehspiegels 28 wird über einen Encoder 30 erfasst. Der von dem Laser 12 erzeugte Lichtstrahl 14 überstreicht somit den durch die Rotationsbewegung erzeugten Erfassungsbereich 18. Wird ein vom Empfänger 24 empfangenes reflektiertes Lichtsignal 20 aus dem Erfassungsbereich 18 empfangen, so kann aus der Winkelstellung der Ablenkeinheit 30 auf die Winkellage des Objektes im Erfassungsbereich 18 geschlossen werden. Zusätzlich wird die Laufzeit der einzelnen Laserlichtpulsen des Sendelichts 14 vom Aussenden bis zum Empfang einer Reflexion an dem Objekt überwacht und aus der Lichtlaufzeit unter Verwendung der Lichtgeschwindigkeit auf die Entfernung des Objektes vom Laserscanner 10 geschlossen. Diese Auswertung erfolgt in einer Auswerteeinheit 32, die dafür mit dem Laser 12, dem Empfänger 24, dem Motor 26 und Encoder 30 verbunden ist.

Alle genannten Funktionskomponenten sind in einem ersten inneren Gehäuse 34 angeordnet, das frontseitig, also im Bereich des Lichtaus- und Lichteintritts, eine Frontscheibe 36 aufweist. Die Frontscheibe 36 ist zur Vermeidung von direkten Reflexionen in den Empfänger schräg gestellt, so dass der Winkel zwischen Lichtstrahl 14 und Frontscheibe 36 ungleich 90° beträgt.

Des Weiteren weist der Sicherheitsscanner 10 einen ersten Eingang 50 auf, der in diesem Ausführungsbeispiel als zweikanaliger Signaleingang 50 zum Anschluss eines Inkrementalgebers 62 ausgebildet ist. Über den Eingang 50 werden erste Signale, die für eine Ist-Geschwindigkeit des Fahrzeugs repräsentativ sind, empfangen. Des Weiteren ist ein zweiter Eingang 52 vorgesehen, der vorzugsweise als einkanaliger Eingang 52 ausgebildet ist. Über diesen zweiten Eingang 52 werden Sollgeschwindigkeitssignale übermittelt. Die Eingänge 50 und 52 sind mit einer Fahrzeuggeschwindigkeitsbestimmungseinheit 32-3 der Auswerteeinheit 32 verbunden. Anhand der über diese Eingänge 50 und 52 übermittelten ersten Signale und Sollgeschwindigkeitssignale wird in der Fahrzeuggeschwindigkeitsbestimmungseinheit 32-3 fehlersicher im Sinne der Normen die Fahrzeuggeschwindigkeit ermittelt, wie dies weiter unten näher beschrieben ist.

In Auswerteeinheit 32 werden alle Daten verarbeitet, um letztendlich ein Sicherheitssignal an einem Ausgang 54 auf einer Leitung 33 bereitstellen zu können.

Über die Winkel- und Entfernungsdaten berechnet die Auswerteeinheit 32 den Ort eines Objektes im Erfassungsbereich 18, so dass auf diese Weise zweidimensionale Schutzfelder 56 im Erfassungsbereich 18 des Sicherheitsscanners 10 vollständig daraufhin überwacht werden können, ob sich ein unzulässiges Objekt in dem Schutzbereich 56 befindet oder das Schutzfeld frei ist. Das jeweilige Schutzfeld 56 ist in seinen Abmessungen durch entsprechende Parameter definiert, die in der Auswerteeinheit 32 in einem Speicher 58 abgelegt sind. Abhängig vom Sicherheitssignal an dem Ausgang 54 des Laserscanners 10 kann somit letztendlich zum Beispiel eine Notbremsung und/oder ein Ausweichmanöver des FTS herbeigeführt werden.

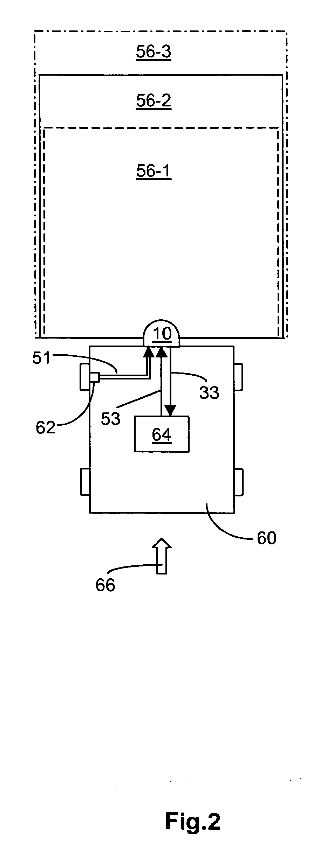

In Fig. 2 ist der erfindungsgemäße Sicherheitsscanner 10 in einer Anwendung an einem FTS 60 dargestellt. Das FTS 60 weist vier Räder und den bereits erwähnten Inkrementalgeber 62 sowie eine Fahrzeugsteuereinheit 64 auf. Die Fahrzeugsteuereinheit 64 steuert insgesamt das Fahrzeug 60, gibt also Beschleunigungen, Lenkeinschläge, Geschwindigkeiten und dergleichen vor. An seiner Frontseite ist der erfindungsgemäße Sicherheitsscanner 10 angeordnet zur Absicherung der Umgebung des FTS, damit dieses nicht mit anderen Objekten, insbesondere Personen, zusammenstößt. Wenn das Fahrzeug 60 nur in eine Richtung 66 fahren kann genügt ein Scanner 10 an der Frontseite, ansonsten könnte auch an der gegenüberliegenden Rückseite ein weiterer Scanner angeordnet sein zur Absicherung der Umgebung bei Rückwärtsfahrt.

Der Scanner 10 ist an seinem Eingang 50 über eine Leitung 51 mit dem Inkrementalgeber 62 und an seinem Eingang 52 über eine Leitung 53 mit der Fahrzeugsteuereinheit 64 verbunden. Ebenfalls ist der Ausgang 54 über die Leitung 33 mit der Fahrzeugsteuereinheit 64 verbunden, um das Sicherheitssignal übermitteln zu können.

Wenn das FTS 60 in Richtung 66 fährt, erfasst der Scanner 10 die aktuelle Fahrzeug-lst-Geschwindigkeit über die Leitung 51. Gleichzeitig wird die von der Fahrzeugsteuereinheit 64 vorgegebene Fahrzeug-Soll-Geschwindigkeit über die Leitung 53 erfasst. Diese wird bevorzugt als binäres Signal übermittelt. Stimmen diese Geschwindigkeiten im Rahmen vorgegebener Toleranzen überein, was in der Auswerteeinheit 32 über Vergleichsmittel 32-2 erfolgt, wird in Abhängigkeit dieser Geschwindigkeit und gegebenenfalls der Fahrtrichtung eines von mehreren in dem Speicher 58 abgespeicherten Schutzfeldern 56 ausgewählt und aktiviert. Dies kann über geeignete Umschaltmittel 32-1 erfolgen. In Fig. 2 sind beispielhaft drei solcher Schutzfelder 56-1, 56-2 und 56-3 gleichzeitig dargestellt. Für größere Geschwindigkeiten wird beispielsweise ein größeres Schutzfeld 56-3 verwendet, als für geringere Geschwindigkeiten, bei der ein kleineres Schutzfeld 56-1 ausreicht.

Detektiert der Scanner 10 in dem aktivierten Schutzfeld 56 ein unzulässiges Objekt, wird das Sicherheitssignal ausgegeben, woraufhin die Fahrzeugsteuerung 64 einen Nothalt oder ein Bremsmanöver oder ein Ausweichmanöver einleiten kann.

Ein Sicherheitssignal wird ebenfalls ausgegeben, wenn mit den Vergleichsmitteln 32-2 in der Fahrzeuggeschwindigkeitsbestimmungseinheit 32-3 der Auswerteeinheit 32 festgestellt wird, dass Soll- und Ist-Geschwindigkeit um einen vorgegebenen Grenzwert differieren. In einer Ausbildung der Erfindung kann diese Differenz für eine vorgegeben begrenzte zeitliche Dauer toleriert werden, so dass beispielsweise nicht bei jeder ruckartigen Beschleunigung ein Sicherheitssignal ausgegeben wird und nicht jedes Mal ein Nothalt ausgelöst würde.

In Weiterbildung der Erfindung kann das Sicherheitssignal so ausgebildet sein, dass anhand des Signals erkennbar ist, ob entweder das Schutzfeld durch ein unzulässiges Objekt verletzt ist oder ob Soll- und Ist-Geschwindigkeit ungleich sind. Gegebenenfalls können die Reaktionen des Systems unterschiedlich ausgestaltet sein.

Wenn die Soll- von der Ist-Geschwindigkeit abweicht, wird bevorzugt immer die höhere Geschwindigkeit zur Schutzfelddimensionierung bzw. Auswahl eines Schutzfeldes verwendet. Dann ist sichergestellt, dass das System immer auf der sicheren Seite und ausreichende Zeit für einen Nothalt vorhanden ist.

## Patentansprüche

1. Sicherheitsscanner (10) zur Absicherung der Umgebung eines Fahrzeugs, insbesondere fahrerlosen Transportsystems (60), mit
- einem Lichtsender (12),
- einer Lichtablenkeinheit (16) zur Ablenkung des Lichtes in ein zu überwachendes Schutzfeld (56),
- einem Empfänger (24) zur Bereitstellung von Empfangssignalen in Abhängigkeit von an im Sichtbereich des Scanners (10) vorhandenen Objekten remittiertem Licht,
- einer Auswerteeinheit (32) zur Auswertung der Empfangssignale und der Inkrementalgebersignale und zur Bereitstellung eines Sicherheitssignals,
- einem ersten, mit einer Fahrzeuggeschwindigkeitsbestimmungseinheit (32-3) verbundenen Eingang (50) zum Empfang von ersten Signalen, die für eine Fahrzeuggeschwindigkeit repräsentativ sind,
- Umschaltmitteln (32-1) zum sicheren Umschalten zwischen wenigstens zwei unterschiedlichen Schutzfeldern (56-x) in Abhängigkeit der Fahrzeuggeschwindigkeit,
**dadurch gekennzeichnet,**
**dass** ein zweiter Eingang (52) mit der Fahrzeuggeschwindigkeitsbestimmungseinheit (32-3) verbunden ist zum Empfang von Sollgeschwindigkeitssignalen des Fahrzeugs (60) und die Fahrzeuggeschwindigkeitsbestimmungseinheit (32-3) Vergleichsmittel (32-2) aufweist, mit denen auf Basis der ersten Signale und der Sollgeschwindigkeitssignale eine Ist- mit einer Sollgeschwindigkeit vergleichbar ist und das Sicherheitssignal auch in Abhängigkeit dieses Vergleichs ausgebbar ist und
**dass** eine Fahrzeugsteuereinheit (64) das Fahrzeug (60) durch Vorgabe der Beschleunigungen steuert.

2. Sicherheitsscanner nach Anspruch 1, **dadurch gekennzeichnet, dass** der zweite Eingang (52) einkanalig ist.

3. Sicherheitsscanner nach Anspruch 2, **dadurch gekennzeichnet, dass** der zweite Eingang (52) zum Empfang von binären Signalen ausgebildet ist.

4. Sicherheitsscanner nach Anspruch 2, **dadurch gekennzeichnet, dass** der zweite Eingang (52) und/oder erste Eingang zum Anschluß an ein Bussystem ausgebildet ist bzw. sind.

5. Sicherheitsscanner nach einem der vorhergehenden Ansprüche, **dadurch gekennzeichnet, dass** die Schutzfelder (56-1, 56-2, 56-3) sich in ihren Abmessungen unterscheiden.

6. Verfahren zur Absicherung der Umgebung eines Fahrzeugs, insbesondere fahrerlosen Transportsystems (60), mit einem Sicherheitsscanner (10) nach einem der vorhergehenden Ansprüche, mit den Schritten:
- Aussenden und Ablenken eines Lichtstrahls (14) in ein zu überwachendes Schutzfeld (56-x),
- Empfangen von an im Sichtbereich des Scanners (10) vorhandenen Objekten remittiertem Licht und Bereitstellen von Empfangssignalen,
- Auswerten der Empfangssignale und in Abhängigkeit davon Bereitstellen eines Sicherheitssignals,
- Empfangen von ersten Signalen, die für eine Ist-Geschwindigkeit des Fahrzeugs (60) repräsentativ sind,
- Empfangen von Sollgeschwindigkeitssignalen des Fahrzeugs,
- Bestimmen einer Fahrzeuggeschwindigkeit durch Vergleichen der Ist- mit der Sollgeschwindigkeit auf Basis der ersten Signale und der Sollgeschwindigkeitssignale,
- Ausgeben des Sicherheitssignals auch in Abhängigkeit dieses Vergleichs,
- Umschalten zwischen wenigstens zwei unterschiedlichen Schutzfeldern in Abhängigkeit der Fahrzeuggeschwindigkeit.
- Steuern des Fahrzeugs (60) mittels einer Fahrzeugsteuereinheit (64) durch Vorgabe der Beschleunigungen.

7. Verfahren nach Anspruch 6, **dadurch gekennzeichnet, dass** bei Abweichung der Ist-Geschwindigkeit von der Soll-Geschwindigkeit um mehr als einen Grenzwert das Sicherheitssignal ausgegeben wird.

8. Verfahren nach Anspruch 7, **dadurch gekennzeichnet, dass** eine Abweichung der Soll- von der Ist-Geschwindigkeit über den Grenzwert für eine begrenzte zeitliche Dauer toleriert wird.

9. Verfahren nach einem der vorhergehenden Ansprüche 6 bis 8, **dadurch gekennzeichnet, dass** bei Abweichung der Soll- von der Ist-Geschwindigkeit die höhere Geschwindigkeit zur Schutzfelddimensionierung bzw. Auswahl eines Schutzfeldes verwendet wird.

10. Verfahren nach einem der vorhergehenden Ansprüche 6 bis 9, **dadurch gekennzeichnet, dass** das Sollgeschwindigkeitssignal als binäres Muster ausgebildet ist.

## Claims

1. A safety scanner (10) for the securing of the environment of a vehicle, in particular of a driverless transport system (60), comprising
- a light transmitter (12);
- a light deflection unit (16) for the deflection of the light into a protected field (56) to be monitored;
- a receiver (24) for the provision of received signals in dependence on light remitted at objects present in the field of view of the scanner (10);
- an evaluation unit (32) for the evaluation of the received signals and of the incremental encoder signals and for the provision of a safety signal;
- a first input (50) connected to a vehicle speed determination unit (32-3) for the reception of first signals which are representative of a vehicle speed;
- switchover means (32-1) for the safe switching over between at least two different protected fields (56-x) in dependence on the vehicle speed,
**characterised in that**
a second input (52) is connected to the vehicle speed determination unit (32-3) for the reception of desired speed signals of the vehicle (60) and the vehicle speed determination unit (32-3) has comparison means (32-2) with which an actual speed can be compared with a desired speed on the basis of the first signals and of the desired speed signals and the safety signal can also be output in dependence on this comparison; and **in that** a vehicle control unit (64) controls the vehicle (60) by setting the accelerations.

2. A safety scanner in accordance with claim 1, **characterised in that** the second input (52) has a single channel.

3. A safety scanner in accordance with claim 2, **characterised in that** the second input (52) is made for the reception of binary signals.

4. A safety scanner in accordance with claim 2, **characterised in that** the second input (52) and/or the first input is or are made for connection to a bus system.

5. A safety scanner in accordance with any one of the preceding claims, **characterised in that** the protected fields (56-1, 56-2, 56-3) differ in their dimensions.

6. A method for the securing of the environment of a vehicle, in particular of a driverless transport system (60), having a safety scanner (10) in accordance with any one of the preceding claims, comprising the steps:
- transmission and deflection of a light beam (14) into a protected field (56-x) to be monitored;
- reception of light remitted at objects present in the field of view of the scanner (10) and provision of received signals;
- evaluation of the received signals and provision of a safety signal in dependence thereon;
- reception of first signals which are representative of an actual speed of the vehicle (60);
- reception of desired speed signals of the vehicle;
- determination of a vehicle speed by a comparison of the actual speed with the desired speed on the basis of the first signals and of the desired speed signals;
- output of the safety signals also in dependence on this comparison;
- switching over between at least two different protected fields in dependence on the vehicle speed,
- controlling the vehicle (60) by means of a vehicle control unit (64) by setting the accelerations.

7. A method in accordance with claim 6, **characterised in that** the safety signal is output on a deviation of the actual speed from the desired speed by more than one limit value.

8. A method in accordance with claim 7, **characterised in that** a deviation of the desired speed from the actual speed over the limit value is tolerated for a limited time duration.

9. A method in accordance with any one of the preceding claims 6 to 8, **characterised in that** the higher speed is used for the dimensioning of the protected field or for the selection of a protected field on a deviation of the desired speed from the actual speed.

10. A method in accordance with any one of the preceding claims 6 to 9, **characterised in that** the desired speed signal is formed as a binary pattern.

## Revendications

1. Scanner de sécurité (10) pour sécuriser l'environnement d'un véhicule automobile, en particulier d'un système de transport sans conducteur (60), comprenant
- un émetteur de lumière (12),
- une unité de déflexion de lumière (16) pour défléchir la lumière dans un champ de protection à surveiller (56),
- un récepteur (24) pour préparer des signaux de réception en fonction de la lumière réémise par des objets présents dans la zone de vision du scanner (10),
- une unité d'évaluation (32) pour évaluer les signaux de réception et les signaux d'un émetteur incrémental et pour la préparation d'un signal de sécurité,
- une première entrée (50), reliée à une unité de détermination de vitesse (32-3) du véhicule, pour la réception de premiers signaux qui sont représentatifs pour une vitesse du véhicule,
- des moyens de commutation (32-1) pour commuter en sécurité entre au moins deux champs de protection différents (56-x) en fonction de la vitesse du véhicule,
**caractérisé en ce que**
une seconde entrée (52) est reliée à l'unité de détermination de vitesse (32-3) du véhicule pour la réception de signaux de vitesse de consigne du véhicule (60), et l'unité de détermination de vitesse (32-3) du véhicule comprend des moyens de comparaison (32-2) au moyen desquels, sur la base des premiers signaux et des signaux de vitesse de consigne, une vitesse réelle peut être comparée à une vitesse de consigne, et le signal de sécurité peut être délivré également en fonction de cette comparaison, et
**en ce qu'**une unité de commande de véhicule (64) commande le véhicule (60) en imposant les accélérations.

2. Scanner de sécurité selon la revendication 1, **caractérisé en ce que** la seconde entrée (52) est à un seul canal.

3. Scanner de sécurité selon la revendication 2, **caractérisé en ce que** la seconde entrée (52) est réalisée pour la réception de signaux binaires.

4. Scanner de sécurité selon la revendication 2, **caractérisé en ce que** la seconde entrée (52) et/ou la première entrée est/sont réalisée(s) pour le branchement à un système de bus.

5. Scanner de sécurité selon l'une des revendications précédentes, **caractérisé en ce que** les champs de protection (56-1,56-2, 56-3) diffèrent de par leurs dimensions.

6. Procédé pour sécuriser l'environnement d'un véhicule, en particulier d'un système de transport sans conducteur (60), comprenant un scanner de sécurité (10) selon l'une des revendications précédentes, comprenant les étapes consistant à :
- émettre et défléchir un rayon de lumière (14) dans un champ de protection à surveiller (56-x),
- recevoir la lumière réémise par des objets présents dans la zone de vision du scanner (10), et préparer des signaux de réception,
- évaluer les signaux de réception et, en fonction de ceux-ci, préparer un signal de sécurité,
- recevoir des premiers signaux qui sont représentatifs pour une vitesse réelle du véhicule (60),
- recevoir des signaux de vitesse de consigne du véhicule,
- déterminer une vitesse du véhicule par comparaison de la vitesse réelle avec la vitesse de consigne sur la base des premiers signaux et des signaux de vitesse de consigne,
- fournir le signal de sécurité également en fonction de cette comparaison,
- commuter entre au moins deux champs de protection différents en fonction de la vitesse du véhicule,
- commander le véhicule (60) au moyen d'une unité de commande de véhicule (64) en imposant les accélérations.

7. Procédé selon la revendication 6, **caractérisé en ce qu'**en cas d'écart de la vitesse réelle par rapport à la vitesse de consigne de plus d'une valeur limite, le signal de sécurité est émis.

8. Procédé selon la revendication 7, **caractérisé en ce qu'**un écart de la vitesse de consigne par rapport à la vitesse réelle au-dessus de la valeur limite est toléré pour une durée temporelle limitée.

9. Procédé selon l'une des revendications précédentes 6 à 8, **caractérisé en ce que** lors d'un écart de la vitesse de consigne par rapport à la vitesse réelle, on utilise la vitesse la plus élevée pour le dimensionnement du champ de protection ou pour le choix d'un champ de protection.

10. Procédé selon l'une des revendications précédentes 6 a 9, **caractérisé en ce que** le signal de vitesse de consigne est réalisé sous forme d'un motif binaire.
